# DEMANDE DE BREVET EUROPEEN

(11) **EP 1 396 379 A1**
(43) Date de publication de la demande: **10.03.2004**
(21) Numéro de dépôt: 03292179.3
(22) Date de dépôt: 04.09.2003
(51) Int. Cl.: B60N 2/30

(54) **Siège escamotable comportant des butées d'appui en position d'utilisation**

(30) Priorité: 05.09.2002 FR 0210966
(71) Demandeur: Renault s.a.s., 92100 Boulogne Billancourt (FR); ADAM OPEL AG, 65423 Rüsselsheim (DE)
(72) Inventeur: Michelin, Didier, 78950 Gambais (FR)
(74) Mandataire: Thibaudeau, David

(57) **Abrégé**

L'invention concerne un siège escamotable (10) de véhicule automobile du type qui comporte au moins un élément d'assise (12) qui est monté mobile, par rapport au plancher horizontal (16) du véhicule, entre une position escamotée dans laquelle l'élément d'assise (12) repose horizontalement sur le plancher (16) par sa face d'assise (22), et une position d'utilisation dans laquelle l'élément d'assise (12) est globalement horizontal et sensiblement au droit de sa position escamotée, et du type dans lequel l'élément d'assise (12) est monté articulé par rapport au plancher (16) par l'intermédiaire d'une structure articulée (18) pour permettre le passage du siège (10) entre sa position escamotée et sa position d'utilisation, caractérisé en ce qu'il comporte des moyens de blocage (58, 24, 72) de l'élément d'assise (12) dans sa position d'utilisation dans laquelle l'élément d'assise (12) est en appui sur lesdits moyens de blocage et sur la structure articulée (18), verticalement à distance et au-dessus du plancher (16).

## Description

L'invention concerne un siège escamotable de véhicule automobile.

L'invention concerne plus particulièrement un siège escamotable de véhicule automobile du type qui comporte au moins un élément d'assise qui est monté mobile, par rapport au plancher horizontal du véhicule, entre une position avant escamotée dans laquelle l'élément d'assise repose horizontalement sur le plancher par sa face d'assise, et une position arrière d'utilisation dans laquelle l'élément d'assise est globalement horizontal et sensiblement au droit de sa position escamotée, et du type dans lequel l'élément d'assise est monté articulé par rapport au plancher par l'intermédiaire d'une structure articulée qui comporte une paire de bielles avant latérales et parallèles et une paire de bielles arrière latérales et parallèles, une extrémité inférieure de chaque bielle étant montée pivotante autour d'un axe transversal fixe par rapport au plancher, et l'extrémité supérieure de chaque bielle étant montée pivotante autour d'un axe transversal fixe par rapport à l'élément d'assise pour permettre le passage du siège entre sa position escamotée et sa position d'utilisation avec retournement de l'élément d'assise.

Les véhicules automobiles du type « break » ou « monospace » comportent un compartiment à bagages intégré à l'arrière de l'habitacle du véhicule. Le compartiment à bagages de ce type de véhicule est généralement suffisamment spacieux pour accueillir des sièges supplémentaires.

A cet effet, il est connu de prévoir des points d'ancrage pour des sièges supplémentaires amovibles. Cependant, il est nécessaire de retirer les sièges pour pouvoir profiter du volume total du compartiment à bagages.

Ces sièges ont généralement un poids important et ils sont peu ergonomiques à manier lorsqu'il faut les installer ou les retirer. De plus, il est nécessaire de stocker ces sièges encombrants lorsqu'ils ne sont pas utilisés.

Pour résoudre ces problèmes, il est connu d'intégrer dans le véhicule des sièges escamotables dans le plancher du véhicule. Ainsi, le document FR-A-2.759.334 décrit et représente un siège dont l'assise est montée sur une structure articulée du type à parallélogramme entre une position d'utilisation du siège et une position escamotée. Le siège comporte un dossier rabattable sur l'assise qui permet alors d'escamoter le siège dans un logement prévu à cet effet dans le plancher.

Ce type de siège nécessite cependant de prévoir une plaque de plancher pour masquer le siège lorsque ce dernier est en position escamotée. De plus, il est nécessaire que le plancher du véhicule soit suffisamment épais pour qu'il soit possible d'y loger les deux épaisseurs superposées de l'assise et du dossier.

Il est également connu, notamment par le document EP-A-0.899.152, d'intégrer au véhicule un siège escamotable du type dans lequel l'assise du siège est montée articulée par rapport au plancher, par l'intermédiaire d'une structure articulée, entre une position d'utilisation dans laquelle l'assise est en appui sur le plancher et une position escamotée dans laquelle le coussin de l'assise est retourné contre le plancher.

Ce siège comporte aussi un dossier qui est dans le prolongement de l'assise et en appui, par sa face d'adossement, contre le plancher lorsque le siège est position escamotée. Les faces apparentes du siège en position escamotée forment alors plancher.

Cependant, la hauteur de l'assise ce type de siège en position d'utilisation par rapport au plancher n'est pas optimale pour permettre à un passager adulte de s'asseoir confortablement.

Pour résoudre ces problèmes, la présente invention propose un siège escamotable du type décrit précédemment caractérisé en ce qu'il comporte des moyens de blocage de l'élément d'assise dans sa position d'utilisation dans laquelle l'élément d'assise est en appui sur lesdits moyens de blocage et sur la structure articulée, verticalement à distance et au-dessus du plancher.

Selon d'autres caractéristiques de l'invention :
- les moyens de blocage sont des moyens par coopération de formes complémentaires entre un élément de structure du véhicule automobile et l'élément d'assise ;
- les moyens de blocage comportent au moins un ergot transversal agencé à l'arrière d'un bord latéral de l'élément d'assise et destiné à être reçu dans le fond d'une encoche solidaire de la structure du véhicule automobile ;
- les moyens de blocage comportent au moins une biellette de support dont une première extrémité fixe inférieure est montée à rotation par rapport au plancher autour d'un axe transversal fixe entre une position de repos lorsque le siège est en position avant escamotée, dans laquelle elle repose horizontalement sur le plancher du véhicule et une position active lorsque le siège est en position arrière d'utilisation, dans laquelle elle est orientée de manière sensiblement perpendiculaire à l'une des bielles arrière d'articulation et dans laquelle ladite bielle arrière d'articulation est en appui sur l'extrémité libre supérieure de la biellette de support ;
- les déplacements de la biellette de support entre sa position de repos et sa position active sont commandés automatiquement au moyen d'un élément de traction dont une première extrémité avant est montée pivotante autour d'un axe transversal sur une des bielles avant d'articulation et dont la seconde extrémité arrière est montée pivotante autour d'un axe transversal sur la biellette de support, en fonction des déplacements du siège entre une position intermédiaire et la position arrière d'utilisation, la biellette de support étant rappelée élastiquement dans sa position de repos ;
- l'élément de traction est une tige de traction dont au moins l'une des extrémités avant ou arrière est montée coulissante dans une fente par rapport à la bielle avant ou à la biellette de support, respectivement, de façon que la tige coulisse sans tirer la biellette de support entre la position avant escamotée du siège et sa position intermédiaire ;
- l'élément de traction est un élément souple qui est détendu entre la position avant escamotée du siège et sa position intermédiaire, et qui est tendu entre la position intermédiaire du siège et sa position arrière d'utilisation ;
- les moyens de blocage comportent au moins une butée qui est portée par l'élément d'assise et qui est destinée à coopérer avec une portion d'une face postérieure d'une bielle arrière.

D'autres caractéristiques et avantages de l'invention apparaîtront au cours de la lecture de la description détaillée qui suit pour la compréhension de laquelle on se reportera aux dessins annexés parmi lesquels :
- la figure 1 est une vue de côté d'un siège escamotable réalisé selon les enseignements de l'invention en position escamotée, en trait interrompu, et dans une première position intermédiaire, en trait continu, lors des déplacements du siège entre sa position escamotée et sa position d'utilisation ;
- la figure 2 représente le siège de la figure 1 dans une deuxième position intermédiaire entre la première position intermédiaire et la position d'utilisation ;
- la figure 3 représente le siège de la figure 1 dans une troisième position intermédiaire entre la seconde position intermédiaire et la position d'utilisation ;
- la figure 4 représente le siège de la figure 1 dans une quatrième position intermédiaire entre la troisième position intermédiaire et la position d'utilisation ;
- la figure 5 représente le siège de la figure 1 en position d'utilisation ;
- la figure 6 est une vue en perspective du siège de la figure 5 en position d'utilisation ;
- la figure 7 est une vue de côté d'un siège en position d'utilisation réalisé selon une variante de l'invention.

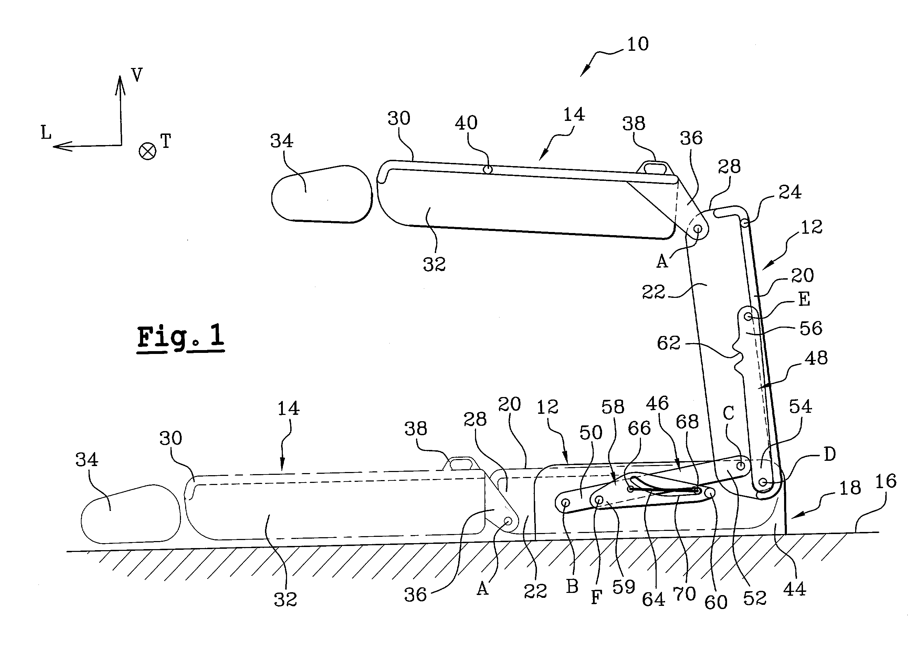

Dans la description qui va suivre, on adoptera à titre non limitatif une orientation longitudinale, verticale et transversale selon l'orientation traditionnellement utilisée dans l'automobile et indiquée par le trièdre L, V, T de la figure 1.

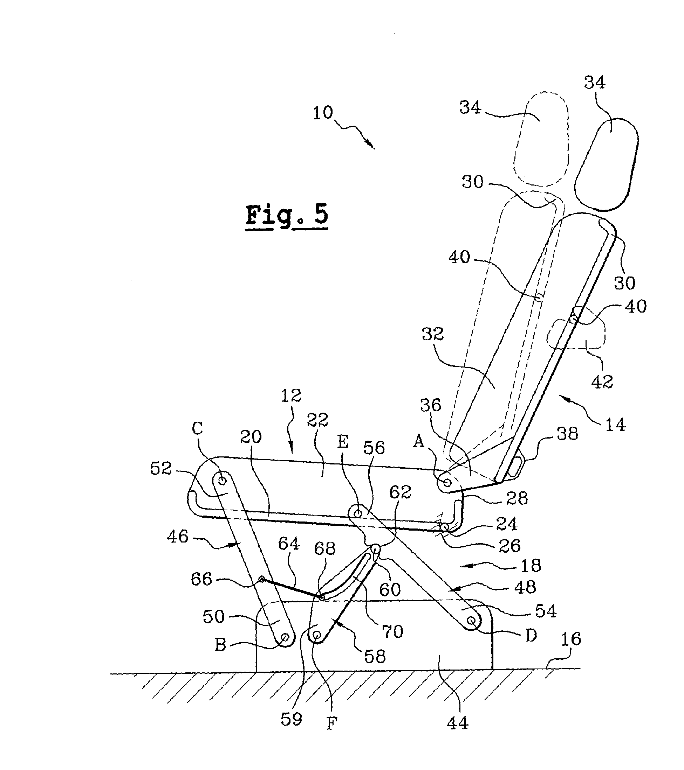

L'invention concerne un siège escamotable 10 de véhicule automobile qui comporte principalement un élément d'assise 12 et un dossier 14. L'élément d'assise 12 est monté mobile par rapport au plancher 16 du véhicule, par l'intermédiaire d'une structure articulée 18, entre une position escamotée horizontale, représentée à la figure 1 en trait interrompu, et une position d'utilisation, représentée à la figure 5.

Nous allons à présent décrire le siège 10 dans sa position d'utilisation comme représentée en trait continu à la figure 5. L'élément d'assise 12 comporte ici une armature métallique inférieure rigide 20 qui porte un coussin supérieur d'assise 22. L'élément d'assise 12 est ici en appui sur la structure articulée 18 verticalement à distance au-dessus du plancher 16.

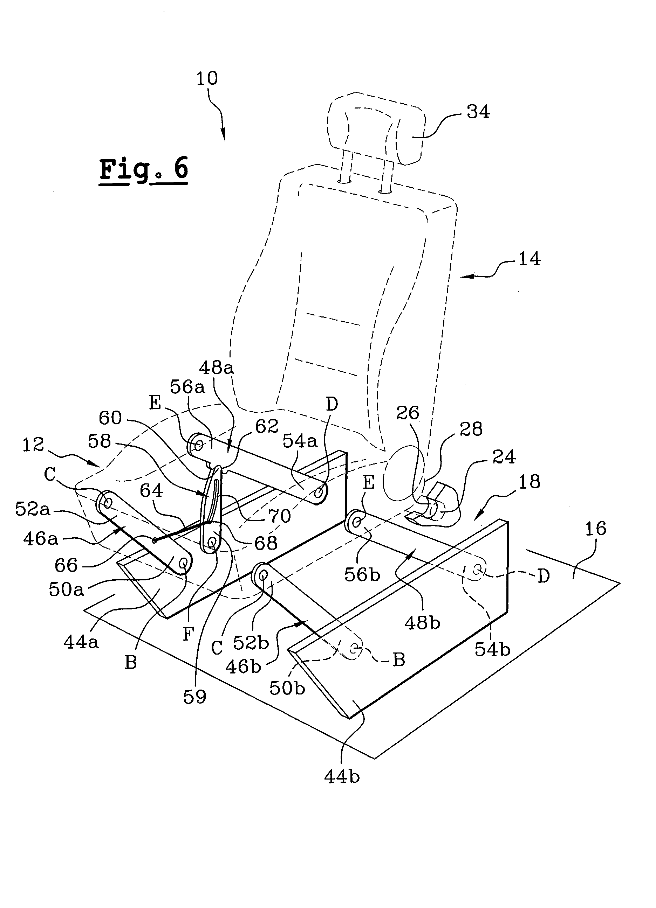

L'élément d'assise 12 comporte ici un ergot transversal 24 qui s'étend depuis l'arrière d'un bord latéral de l'armature d'assise 20, qui est ici le bord gauche en considérant la figure 6 du point de vue d'un passager. L'ergot 24 est destiné à être reçu dans le fond d'une encoche 26 fixe par rapport à la structure du véhicule, comme illustré à la figure 5. L'encoche 26 est située au-dessus du plancher 16 de façon à bloquer le siège 10 en position d'utilisation.

Le dossier 14 s'étend vers le haut de manière globalement verticale depuis un bord transversal postérieur 28 de l'élément d'assise 12. Le dossier 14 comporte notamment une armature postérieure 30 dont une face avant porte un coussin antérieur d'adossement 32 qui est destiné à supporter le dos d'un passager. Un appui-tête 34 est ici agencé à l'extrémité supérieure du dossier 14. Un bord inférieur 36 de l'armature de dossier 30 est monté pivotant sur l'arrière de l'élément d'assise 12, autour d'un axe transversal inférieur A.

Le siège 10 comporte ici une butée (non représentée) qui est destinée à arrêter le pivotement du dossier 14 par rapport à l'élément d'assise 12, dans le sens anti-horaire selon la figure 5, lorsque le dossier 14 atteint une orientation d'utilisation sensiblement perpendiculaire à celle de l'élément d'assise 12.

La face arrière de l'armature de dossier 30 comporte une poignée 38 qui est avantageusement située à proximité du bord inférieur 36 du dossier 14. La poignée 38 est destinée à permettre à un utilisateur de manoeuvrer le siège 10 entre sa position escamotée et sa position d'utilisation.

Un bord latéral de l'armature de dossier 30 comporte ici dans sa moitié supérieure un pêne transversal 40 destiné à coopérer avec un verrou 42 solidaire de la structure du véhicule afin de bloquer le siège 10 en position d'utilisation.

La structure articulée 18 sur laquelle l'élément d'assise 12 est en appui est visible à la figure 6. La structure articulée 18 comporte notamment un socle 44 qui est fixe par rapport au plancher 16. Le socle comporte ici deux ailes verticales qui s'étendent longitudinalement l'une 44a à droite et l'autre 44b à gauche de l'élément d'assise 12.

Une paire de bielles avant 46 et une paire de bielles arrière 48 sont articulées sur le socle 44. Chaque paire de bielles avant 46 et arrière 48 comporte respectivement une bielle latérale droite 46a, 48a qui est parallèle à une bielle latérale gauche 46b, 48b.

Une extrémité inférieure 50a, 50b de chaque bielle de la paire avant 46a et 46b, est montée pivotante par rapport à une aile du socle, respectivement 44a et 44b, autour d'un même axe transversal inférieur avant B et une seconde extrémité supérieure 52a, 52b est montée pivotante par rapport à un bord latéral de l'élément d'assise 12 autour d'un axe transversal supérieur C situé à l'avant de l'élément d'assise 12.

Une extrémité inférieure 54a, 54b de chaque bielle de la paire arrière, 48a et 48b, est montée pivotante par rapport à une aile du socle, respectivement 44a et 44b, autour d'un même axe transversal inférieur arrière D et une seconde extrémité supérieure 56a, 56b est montée pivotante par rapport à un bord latéral de l'élément d'assise 12 autour d'un axe transversal supérieur E situé à un tiers arrière de l'élément d'assise 12.

Dans la position d'utilisation, les bielles arrière 48a, 48b sont orientées globalement à 45° vers l'avant par rapport à la verticale V et les bielles avant 46a, 46b sont orientées globalement à environ 20° vers l'avant par rapport à la verticale V.

La structure articulée 18 comporte aussi une biellette de support 58 qui est montée articulée par son extrémité inférieure 59 autour d'un axe transversal fixe F sur l'aile droite du socle 44a, entre une position active de soutien de la bielle arrière droite 48a et une position horizontale de repos. L'axe fixe F de la biellette de support 58 se situe ici globalement entre les extrémités inférieures des bielles arrière droite 48a et avant droite 46a telles que représentée à la figure 6.

Lorsque le siège 10 est en position d'utilisation, la biellette de support 58 est en position active. La biellette de support 58 comporte une seconde extrémité libre 60 destinée à coopérer avec une échancrure 62 portée par la moitié supérieure de la face antérieure de la bielle arrière droite 48a dans la position d'utilisation du siège 10. La biellette de support 58 est alors sensiblement perpendiculaire aux bielles arrière 48a et 48b.

La structure articulée 18 comporte une tige de traction 64 destinée à transmettre un effort depuis la bielle avant droite 46a à la biellette de support 58. Une première extrémité avant 66 de la tige de traction 64 est montée pivotante autour d'un axe transversal situé globalement au milieu du corps de la bielle avant droite 46a et la seconde extrémité arrière de la tige de traction 64 comporte un pivot 68 monté pivotant autour d'un axe transversal sur la biellette de support 58.

La biellette de support 58 comporte ici une fente 70 orientée globalement longitudinalement par rapport à son grand axe. Le pivot arrière 68 de la tige de traction 64 est reçu en coulissement dans la fente 70 de biellette de support 58 entre une première extrémité de la fente 70 qui est proximale par rapport à l'axe fixe F de la biellette de support 58, et une seconde extrémité distale de la fente 70.

Dans la position d'utilisation du siège 10, les efforts appliqués à l'élément d'assise 12 sont transmis à la structure du véhicule par l'intermédiaire des bielles d'articulation 46a, 46b et 48a, 48b, de la biellette de support 58 et de l'ergot 24.

On a représenté à la figure 1, en trait interrompu, le siège 10 dans sa position escamotée. L'élément d'assise 12 est alors retourné horizontalement, le coussin d'assise 22 étant en appui sur le plancher 16 du véhicule, sensiblement au droit de sa position d'utilisation de l'élément d'assise 12. Le bord postérieur 28 de l'élément d'assise 12 sur lequel le dossier 14 est articulé se situe alors vers l'avant. Le dossier 14 se situe horizontalement dans le prolongement de l'élément d'assise 12 vers l'avant et le coussin d'adossement 32 est en appui sur le plancher 16 du véhicule. Les armatures d'assise 20 et de dossier 30 sont orientées horizontalement vers le haut, formant avantageusement une portion de plancher 16 du véhicule.

Les bielles d'articulation arrière 48a et 48b sont alors orientées globalement longitudinalement, et leur seconde extrémité supérieur 56a, 56b se situe alors vers l'avant. Les bielles d'articulation avant 46a et 46b sont orientées globalement longitudinalement et leur extrémité supérieure 52a, 52b se situe vers l'arrière. Les bielles avant droite 46a et arrière droite 48a, respectivement avant gauche 46b et arrière gauche 48b, sont légèrement décalées transversalement l'une par rapport à l'autre de façon à être comprises globalement dans un même plan horizontal.

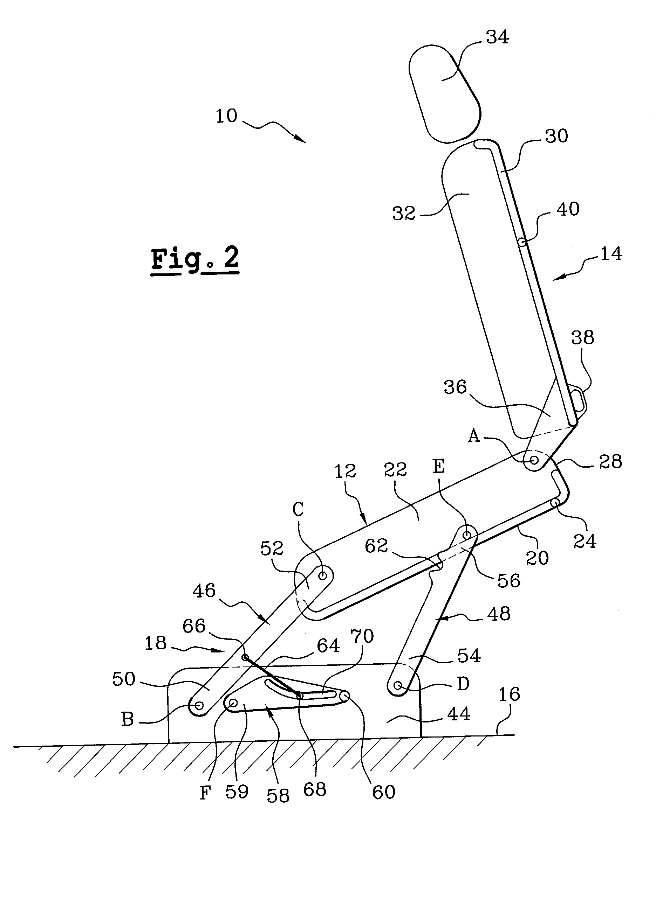

Comme illustré aux figures 1 et 2, la biellette de support 58 est en position de repos, c'est-à-dire qu'elle est orientée longitudinalement, au-dessus du plancher 16 du véhicule, son extrémité libre 60 étant dirigée vers l'arrière. L'extrémité arrière coulissante 68 de la tige de traction 64 se situe alors à l'extrémité distale de la fente 70.

La biellette de support 58 comporte ici des moyens de rappel élastiques (non représentés) vers sa position de repos.

Nous allons à présent décrire la cinématique du siège 10 entre sa position escamotée et sa position d'utilisation.

Le siège 10 est en position escamotée comme représenté en trait interrompu à la figure 1. L'utilisateur saisit la poignée 38 du dossier 14 afin de tirer le dossier 14 d'abord vers le haut puis vers l'arrière.

L'élément d'assise 12 pivote alors par rapport au socle 44 sensiblement autour de l'axe transversal inférieur arrière D dans le sens horaire selon la figure 1, jusqu'à ce qu'il soit globalement vertical. La paire de bielles arrière 48a, 48b accompagne le mouvement de pivotement de l'élément d'assise 12 autour de son axe inférieur D jusqu'à ce qu'elle soit sensiblement verticale. La paire de bielles avant 46a, 46b demeure sensiblement en position horizontale.

Le dossier 14, entraîné par son poids, pivote par rapport à l'élément d'assise 12 dans le sens anti-horaire selon la figure 1, autour de son axe transversal A. Il occupe alors une position sensiblement horizontale, en appui sur la butée.

Le siège 10 est alors dans une position représentée en trait continu sur la figure 1.

L'utilisateur tire ensuite la poignée 38 vers l'arrière de façon que l'élément d'assise 12 continue à pivoter dans un sens horaire selon la figure 1. Le poids du dossier 14 entraîne alors l'élément d'assise 12 en rotation dans un sens horaire, selon la figure 2, autour de l'axe transversal arrière supérieur E de la paire de bielles arrière 48a, 48b qui demeure globalement verticale.

L'utilisateur utilise avantageusement de la poignée 38 pour accompagner le basculement du siège 10 vers l'arrière.

Le siège atteint alors la position représentée à la figure 2 dans laquelle la paire de bielles avant 46a, 46b a pivoté d'environ 45° autour de son axe inférieur B dans un sens anti-horaire selon la figure 2.

Ce pivotement de la paire de bielles avant 46a, 46b entraîne le coulissement du pivot arrière 68 de la tige de traction 64 en direction de l'extrémité proximale de la fente 70 de la biellette de support 58. La biellette de support 58 reste en position de repos de façon à ne pas interférer avec le mouvement de l'élément d'assise 12.

L'utilisateur pousse ensuite la poignée 38 vers l'avant. Le siège 10, et notamment l'élément d'assise 12, effectue globalement une translation vers l'avant par l'intermédiaire du pivotement sensiblement simultané des bielles avant 46a, 46b et arrière 48a, 48b autour de leurs axes inférieurs respectifs B et D, dans un sens anti-horaire selon la figure 2. Durant ce mouvement, l'élément d'assise 12 s'approche sensiblement d'une orientation horizontale.

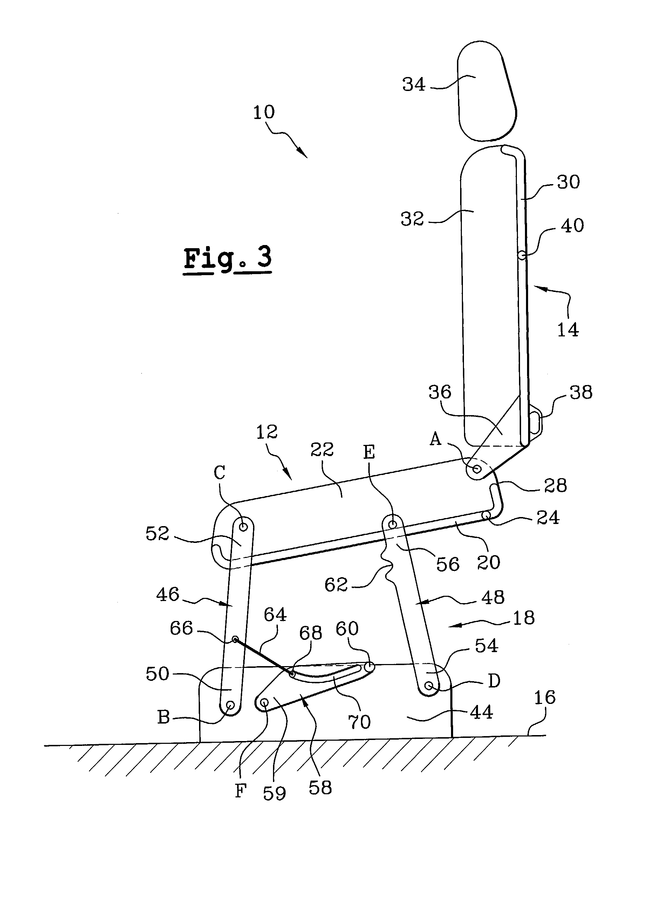

Le siège 10 occupe alors une position intermédiaire représentée à la figure 3 dans laquelle le pivotement des bielles avant 46a, 46b, et notamment de la bielle avant droite 46a, a entraîné le pivot arrière 68 de la tige de traction 64 en coulissement jusqu'à l'extrémité proximale de la fente 70 de la biellette de support 58. A partir de cette position intermédiaire, la biellette de support 58 est susceptible d'être entraînée en pivotement autour de l'axe transversal inférieur F.

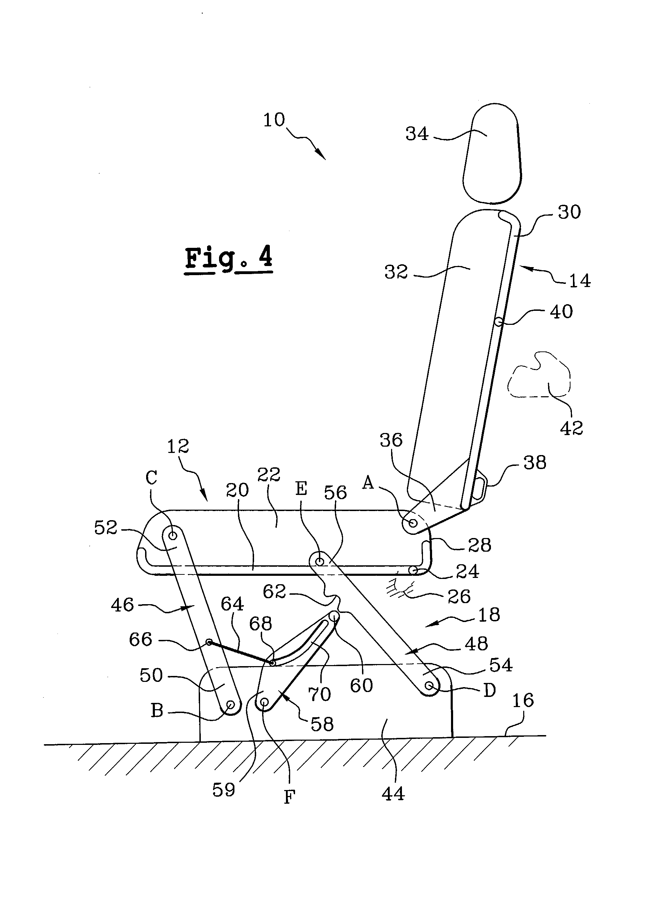

Le mouvement global de translation du siège 10 vers l'avant se poursuit depuis la position intermédiaire jusqu'à atteindre la position représentée à la figure 4. La biellette de support 58 a alors pivoté autour de son axe inférieur F dans un sens anti-horaire selon la figure 4. La biellette de support 58 est alors sensiblement en position active et son extrémité libre 60 est prête à recevoir l'échancrure 62 de la bielle arrière droite 48a.

Du côté gauche de l'élément d'assise 12, l'ergot 24 est en regard du fond de l'encoche 26.

Les déplacements de l'élément d'assise 12 sont finalement bloqués en position d'utilisation du côté droit par la butée entre l'extrémité libre 60 de la biellette de support 58 contre le fond de l'échancrure 62 de la bielle arrière 48a et du côté gauche par le contact entre l'ergot 24 de l'élément d'assise 12 et le fond de l'encoche 26 du véhicule.

Le dossier 14 est également bloqué dans une position arrière d'utilisation, représentée en trait continu à la figure 5, grâce au pêne 40 qui est reçu dans le verrou 42. Le verrou 42 est destiné à bloquer le dossier 14 en position d'utilisation et à supporter le poids du passager.

Le verrou 42 est aussi destiné à verrouiller le siège 10 en position d'utilisation en bloquant les déplacements de l'élément d'assise 12 depuis la position d'utilisation vers la position escamotée.

Lorsqu'un passager est assis sur le siège 10, son poids est supporté par l'élément d'assise 12 qui transmet les efforts à la structure du véhicule par l'intermédiaire :
- de la structure articulée 18 qui transmet une partie des efforts à la biellette de support 58 qui travaille alors en compression ;
- de l'ergot 24.

Il est à noter que l'un ou l'autre des systèmes de butée, la biellette de support 58, ou l'ergot 24, peuvent être utilisés indépendamment sur les bielles arrière droite 48a ou gauche 48b.

Dans une autre variante non représentée, la tige de traction 64 est un élément souple qui est détendu entre la position avant escamotée du siège 10 et sa position intermédiaire, et qui est tendu entre la position intermédiaire du siège 10 et sa position arrière d'utilisation de façon à entraîner la biellette de support 58 en traction.

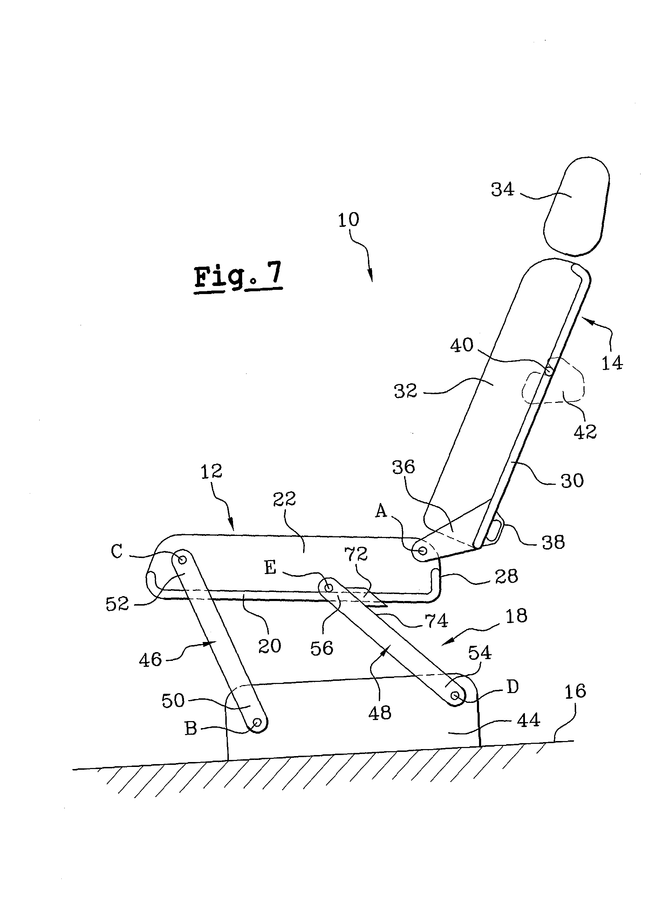

Dans une autre variante, représentée à la figure 7, l'armature d'assise 20 comporte au moins une butée qui est destinée à coopérer avec une portion d'une face postérieure 74 d'au moins une des bielles arrière 48a, 48b. Les déplacements de l'élément d'assise 12 sont alors arrêtés en position d'utilisation par la coopération entre la butée 72 et la face postérieure 74 de la bielle arrière 48a ou 48b. Les efforts reçus par l'élément d'assise 12 sont transmis :
- directement à la paire de bielles avant 46a, 46b ;et
- par l'intermédiaire de la butée 72 à la paire de bielles arrière 48a, 48b.

Les efforts sont ensuite transmis à la structure du véhicule par les paires de bielles avant 46a, 46b et arrière 48a, 48b.

## Revendications

1. Siège escamotable (10) de véhicule automobile du type qui comporte au moins un élément d'assise (12) qui est monté mobile, par rapport au plancher horizontal (16) du véhicule, entre une position avant escamotée dans laquelle l'élément d'assise (12) repose horizontalement sur le plancher (16) par sa face d'assise (22), et une position arrière d'utilisation dans laquelle l'élément d'assise (12) est globalement horizontal et sensiblement au droit de sa position escamotée, et du type dans lequel l'élément d'assise (12) est monté articulé par rapport au plancher (16) par l'intermédiaire d'une structure articulée (18) qui comporte une paire de bielles avant (46a, 46b) latérales et parallèles et une paire de bielles arrière (48a, 48b) latérales et parallèles, une extrémité inférieure (50a, 50b, 54a, 54b) de chaque bielle étant montée pivotante autour d'un axe transversal (B, D) fixe par rapport au plancher (16), et l'extrémité supérieure (52a, 52b, 56a, 56b) de chaque bielle étant montée pivotante autour d'un axe transversal (C, E) fixe par rapport à l'élément d'assise (12) pour permettre le passage du siège (10) entre sa position escamotée et sa position d'utilisation avec retournement de l'élément d'assise (12),
**caractérisé en ce qu'**il comporte des moyens de blocage (58, 24, 72) de l'élément d'assise (12) dans sa position d'utilisation dans laquelle l'élément d'assise (12) est en appui sur lesdits moyens de blocage et sur la structure articulée (18), verticalement à distance et au-dessus du plancher (16).

2. Siège escamotable (10) selon la revendication précédente, **caractérisé en ce que** les moyens de blocage sont des moyens par coopération de formes complémentaires entre un élément de structure (26) du véhicule automobile et l'élément d'assise (12).

3. Siège escamotable selon la revendication précédente, **caractérisé en ce que** les moyens de blocage comportent au moins un ergot transversal (24) agencé à l'arrière d'un bord latéral de l'élément d'assise (12) et destiné à être reçu dans le fond d'une encoche (26) solidaire de la structure du véhicule automobile.

4. Siège escamotable selon la revendication 1, **caractérisé en ce que** les moyens de blocage comportent au moins une biellette de support (58) dont une première extrémité fixe inférieure (59) est montée à rotation par rapport au plancher autour d'un axe transversal fixe (F) entre une position de repos lorsque le siège (10) est en position avant escamotée, dans laquelle elle s'étend horizontalement par rapport au plancher (16) du véhicule et une position active lorsque le siège (10) est en position arrière d'utilisation, dans laquelle elle est orientée de manière sensiblement perpendiculaire à l'une des bielles arrière d'articulation (48a, 48b) et dans laquelle ladite bielle arrière d'articulation (48a, 48b) est en appui sur l'extrémité libre supérieure (60) de la biellette de support (58).

5. Siège escamotable (10) selon la revendication précédente, **caractérisé en ce que** les déplacements de la biellette de support (58) entre sa position de repos et sa position active sont commandés automatiquement au moyen d'un élément de traction (64) dont une première extrémité avant (66) est montée pivotante autour d'un axe transversal sur une des bielles avant d'articulation (46a, 46b) et dont la seconde extrémité arrière (68) est montée pivotante autour d'un axe transversal sur la biellette de support (58), en fonction des déplacements du siège (10) entre une position intermédiaire et la position arrière d'utilisation, la biellette de support (58) étant rappelée élastiquement dans sa position de repos.

6. Siège escamotable selon la revendication précédente, **caractérisé en ce que** l'élément de traction est une tige de traction (64) dont au moins l'une des extrémités avant (66) ou arrière (68) est montée coulissante dans une fente (70) par rapport à la bielle avant (46a, 46b) ou à la biellette de support (58), respectivement, de façon que la tige (64) coulisse sans tirer la biellette de support (58) entre la position avant escamotée du siège (10) et sa position intermédiaire.

7. Siège escamotable selon la revendication 6, **caractérisé en ce que** l'élément de traction (64) est un élément souple qui est détendu entre la position avant escamotée du siège (10) et sa position intermédiaire, et qui est tendu entre la position intermédiaire du siège (10) et sa position arrière d'utilisation.

8. Siège escamotable selon la revendication 1, **caractérisé en ce que** les moyens de blocage comportent au moins une butée (72) qui est portée par l'élément d'assise (12) et qui est destinée à coopérer avec une portion d'une face postérieure (74) d'une bielle arrière (48a, 48b).
